Europäisches Patentamt

European Patent Office

Office européen des brevets

(11) Publication number: 0 384 999
A1

# EUROPEAN PATENT APPLICATION

(21) Application number: 89301951.3

(22) Date of filing: 28.02.89

(51) Int. Cl.5: **B29C 43/34, B29C 31/04, B29C 43/20**

(43) Date of publication of application:
05.09.90 Bulletin 90/36

(84) Designated Contracting States:
AT BE CH DE ES FR GB GR IT LI LU NL SE

(71) Applicant: Chang, Yi Min
7th Floor, No. 5, Alley 40, Lane 190, Te Hsin
E. Road
Taipei(TW)

Applicant: Chang, Yi Shen
3 rd Fl. No.3, Alley 1, Lane 1544, Min Chuan
E. Road
Taipei(TW)

(72) Inventor: Chang, Yi Min
7th Floor, No. 5, Alley 40, Lane 190, Te Hsin
E. Road
Taipei(TW)
Inventor: Chang, Yi Shen
3 rd Fl. No.3, Alley 1, Lane 1544, Min Chuan
E. Road
Taipei(TW)

(74) Representative: Woodward, John Calvin et al
VENNER SHIPLEY & CO. 368 City Road
London EC1V 2QA(GB)

(54) Improved automatic multicolour rubber moulding machine.

(57) An automatic multicolour rubber moulding machine comprising a feed unit (2) having a plurality of tanks (21) for rubber material of different colours, a heating and pressing unit (1) having upper and lower electric heaters (11), and a mould unit (4) consisting of one or more distribution boards (5) mounted on the bottom of the rubber tanks (21) and including a plurality of gates (51), paths (52) and ports (53). A female mould (6) is mounted for insertion into the feed unit (2) and the heating and pressing unit (1). A male mould (7) is attached to a mould opener (3) or is mounted under the upper heater in the heating and pressing unit (1) and is constructed in such a way that the female mould (6) can enter the feed unit (2) for the rubber material of different colours to flow from the tanks through the gates (51), paths (52) and ports (53) of the distribution board (5) into the cavities in the female mould (6), be withdrawn for the mould opener (3) to put on the male mould (7), re-enter the heating and pressing unit (1) for heating and vulcanizing and be withdrawn again for the mould opener (3) to open the moulds for removal of the final products so that the multicolour products are made in an integrated operation.

FIG.1

# IMPROVED AUTOMATIC MULTICOLOUR RUBBER MOULDING MACHINE

This invention relates to a multicolour rubber moulding machine which can make rubber products of different colours at the same time.

Conventional rubber moulding machines currently available cannot feed automatically, especially when multicolour products such as rubber keys for a computer keyboard have to be made at the same time. In using such machines, workers have to prepare pieces of rubber of the approximate size and shape of the finished product and put these pieces in moulds shaped to form the final product. A conventional rubber moulding machine of this type has the following disadvantages :

(1) The rubber must be punched or cut into pieces before being put in the moulds to form the final product. This takes time, effort and money.

(2) The cut and punched pieces must be of the approximate size and shape of the finished product otherwise an uneven density in the finished product will result as the mass in the centre will have a greater density than that at the edges.

(3) The operation of material feeding, mould taking and mould closing is carried out manually which takes time and increases the cost.

It is an object of this invention to provide an improved rubber moulding machine which can automatically form rubber products of different colours at the same time and which overcomes or substantially reduces the disadvantages of the known machines.

The automatic multicolour rubber moulding machine of the invention is characterised by a heating and pressing unit, a feed unit and a mould opener. The feed unit has a plurality of automatic feed tanks under which a distribution board of the female mould is mounted with the outlets for the tanks being aligned with the gates of the distribution board so that the rubber material of different colours can be fed automatically to the different cavities of the female mould. Under automatic control, the female mould can automatically enter the feed unit and the heating and pressing unit. After the female mould withdraws from the feed unit, the mould opener can automatically put the male mould in place. Then the female mould with the male mould can enter the heating and pressing unit for the rubber material of different colours in the moulds to be heated at the upper and lower heaters and vulcanized at the same time. When the preset time for vulcanization is over, the moulds open for removal of the final products after being opened by the mould opener. Thus, rubber products of different colours are formed in an integrated operation.

Another feature of this invention is that the female mould has one or more distribution boards which overlap each other and are mounted under the tanks of the feed unit. The distribution board has a plurality of gates, paths and ports. The gates are in alignment with the outlets of the tanks while the ports are in alignment with the cavities of the female mould. Thus, the rubber material in different colours can flow freely from different tanks through different gates, paths and ports of the distribution board to different cavities of the female mould for forming rubber keys of different colours.

A preferred embodiment of the invention will now be described, by way of example only, with reference to the accompanying drawings, in which :

Figure 1 is a vertical view of an automatic multicolour rubber moulding machine of this invention;

Figure 2 illustrates the female mould and distribution board of the moulding machine of Figure 1;

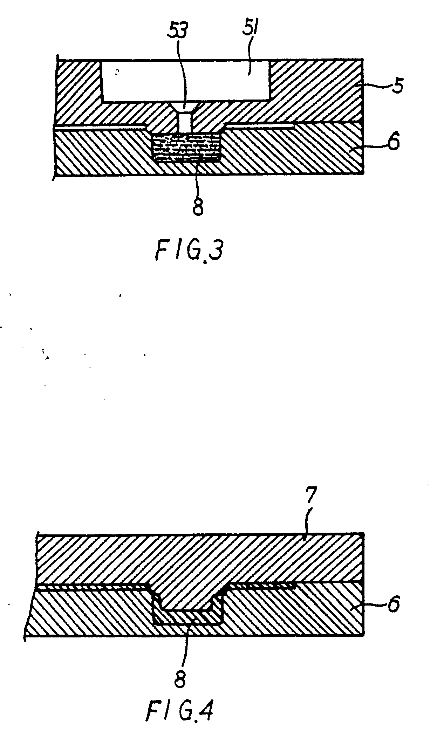

Figure 3 illustrates the joint between the female mould and distribution board to permit the rubber material to flow;

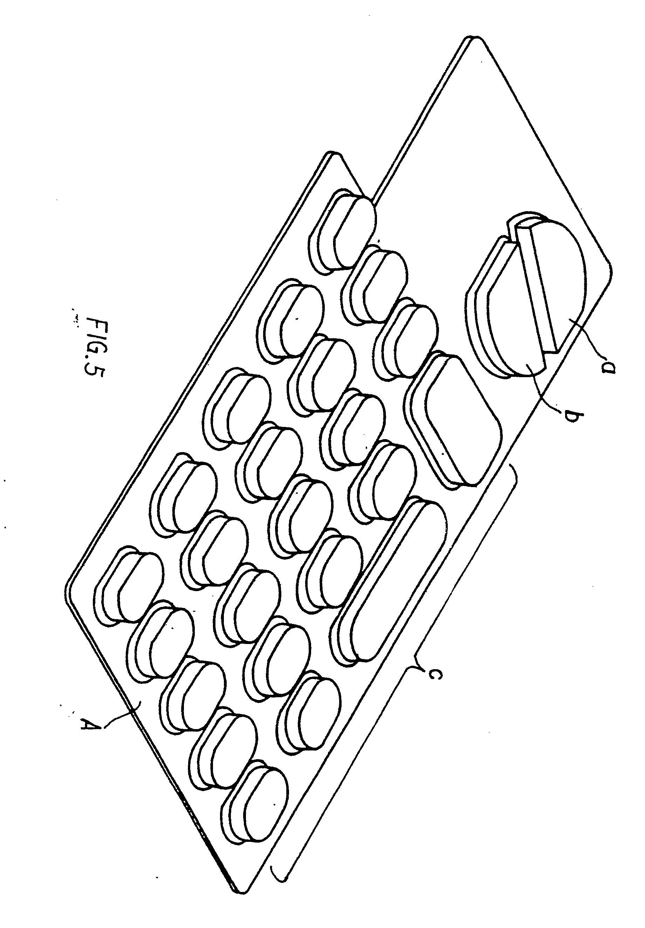

Figure 4 illustrates the matching of the female and male moulds; and

Figure 5 illustrates the rubber keyboard products formed in the mould as shown in Figure 3.

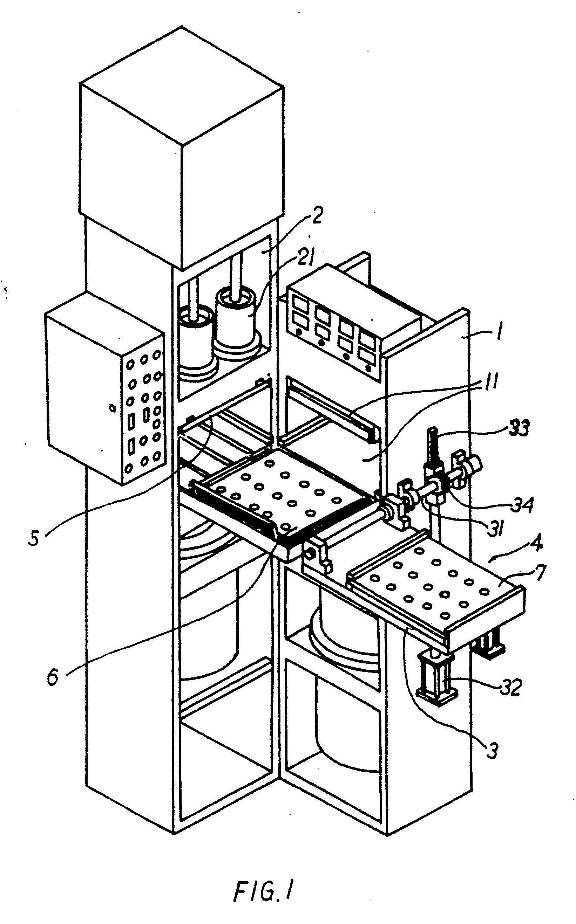

Figure 1 shows an automatic multicolour rubber moulding machine of the invention to comprise a heating and pressing unit 1, feed unit 2, mould opener 3 and mould unit 4. The heating and pressing unit 1 consists mainly of upper and lower heaters 11. The feed unit 2 consists of a plurality of feed tanks 21 (4 in the preferred embodiment).

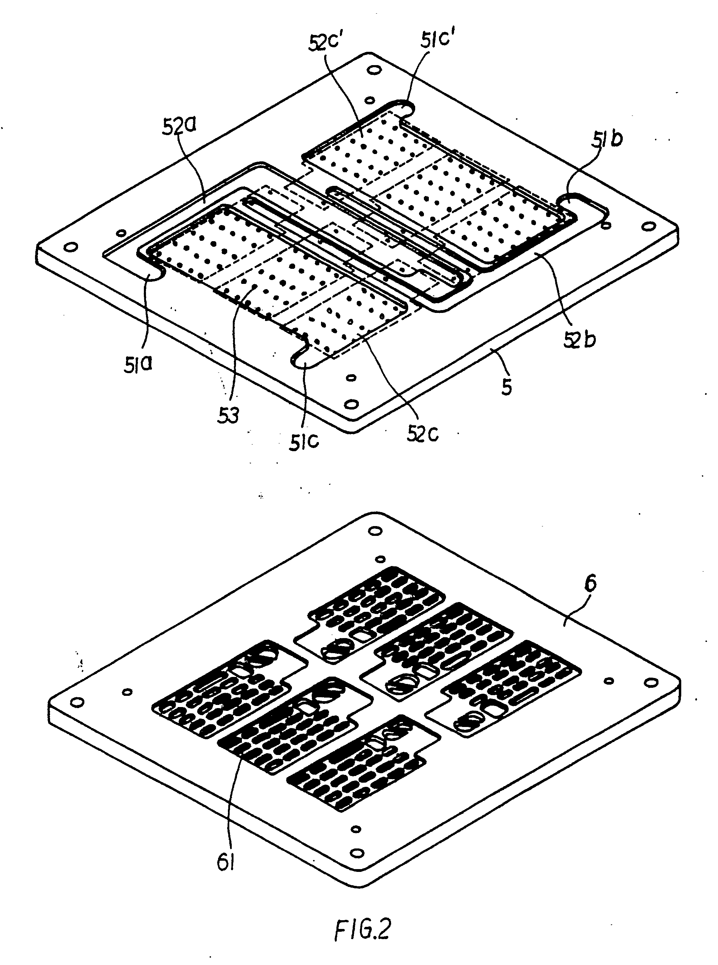

The mould unit 4 consists of one or more distribution boards 5 (depending on the actual need), a female mould 6 and male mould 7. As shown in Figure 2, the distribution board 5 mounted on the bottom of the feed tanks 21 has gates 51a, 51b, 51c, 51c' corresponding to the outlets of the feed tanks 21, feed paths 52a, 52b, 52c, 52c' and distribution ports 53 so that the rubber material from the feed tanks can be fed through the gates 51a, 51b, 51c, 51c', feed paths 52a, 52b, 52c, 52c' and distribution ports 53 to the cavities 61 of the female mould 6. The moulds in the illustrated preferred embodiment are designed for moulding the rubber keys for six computer keyboards. As shown in Figure 5, the keys a are in one colour, the keys b are in another colour and the keys c are in yet another colour. It is so designed that the path 52a leads to the cavities 61 of keys a, and the path b to the cavities 61 of keys b, the paths 52c, 52c' to the cavities 61 of keys c.

The female mould 6 can be inserted into the feed unit 2 and the heating and pressing unit 1. The male mould 7 is attached to the mould opener 3 which is mounted on the side of the heating and pressing unit 1 and consists of a shaft 31, a rack 33, a pinion 34 and two hydraulic cylinders 32. It is so constructed that the shaft 31 can be turned hydraulically to open or close the mould.

In operation, the male mould 7 is opened (180 ) and the female mould 6 enters automatically the feed unit 2 and goes up to join the distribution board 5. The rubber material 8 of different colours flows from the feed tanks 21 of the feed unit 2 through the gates 51a, 51b, 51c, 51c', feed paths 52a, 52b, 52c, 52c' and distribution ports 53 in the distribution board 5 into the cavities 61 of the female mould 6. At this time, conductors or black particles, if necessary, can be put in the cavities 61 of the male mould 7 corresponding to the female mould 6. After being filled, the female mould 6 lowers and withdraws from the feed unit 2. At this time, the mould opener 3 closes the mould automatically . The female and male moulds are then carried into the heating and pressing unit 1 and raised so that the rubber material 8 can be heated by the upper and lower electric heaters 11 and vulcanized at the same time. When the preset time for vulcanization is over, the female and male moulds withdraw automatically from the heating and pressing unit 2 and are opened automatically by the mould opener 3. The rubber keys moulded by heating under pressure are then removed from the moulds.

In case no conductors are put in the moulds, the male mould 7 may be mounted in the heating and pressing unit 1 under the upper electric heater 11.

The whole operation is carried out automatically under automatic control.

From the above, it will be appreciated that the automatic multicolour rubber moulding machine can simultaneously feed a fixed amount of rubber material of different colours to specific cavities of the female mould and shape the rubber into final products in an integrated operation.

## Claims

1. An automatic multicolour rubber moulding machine characterised by a feed unit (2) including a plurality of tanks (21) for rubber materials of different colours, a heating and pressing unit (1) having upper and lower electric heaters (11), a mould unit (4) consisting of one or more distribution boards (5), a female mould (6) and a male mould (7), said distrubution boards being mounted on the bottom of the rubber material tanks and overlapping each other and having a plurality of gates (51), feed paths (52) and distribution ports (53), the female mould (6) being capable of being inserted into the feed unit (2) and the heating and pressing unit (1), said male mould (7) being attached to a mould opener (3) when not in use and being constructed in such a way that the female mould (6) can enter the feed unit (2) for the rubber materials of different colours to flow from the tanks (21) through the gates, paths and ports of the distribution board (5) into the cavities of the female mould (6), can be withdrawn for the mould opener (3) to place on the male mould (7) in position, re-enter the heating and pressing unit (1) for heating and vulcanizing, and be withdrawn again for removal of the final products from the moulds after they have been opened by the mould opener (3) so that the multicolour rubber products are made in an integrated operation.

2. An automatic multicolour rubber moulding machine according to claim 1 characterised in that the male mould (7) is mounted in the heating and pressing unit (1) underneath the upper electric heater.

FIG. 1

FIG.2

FIG.3

FIG.4

FIG.5

EP 0 384 999 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 145 458 (TORAY SILICONE CO. LTD) <br> * Abstract; page 2, lines 6-30; page 3, lines 1-7; page 4, lines 20-32; page 5, lines 1-4; specially page 6, lines 10-32; claims 1-3; figures 1-4 * <br> --- | 1-2 | B 29 C 43/34 <br> B 29 C 31/04 <br> B 29 C 43/20 |
| X | US-A-3 389 427 (N.R. REYBURN) <br> * Column 4, lines 1-48; column 5, lines 39-66; claims 1-8,17,18 * <br> --- | 1 | |
| A | US-A-4 580 964 (J.A. REPELLA) <br> * Claims 1-2; figure 1 * <br> --- | 1-2 | |
| A | US-A-3 898 121 (E. HOLROYD et al.) <br> * Abstract; figures 5,6,9-16; column 2, lines 51-60; column 3, lines 25-39; claim 1 * <br> --- | 1 | |
| A | CH-A- 403 281 (H.S. BAUMER) <br> * Claims; figures * <br> --- | 1 | TECHNICAL FIELDS SEARCHED (Int. Cl.5) |
| A | FR-A-2 376 732 (E. LONGINOTTI) <br> * Claims; figures * <br> ----- | 1 | B 29 C <br> B 30 B <br> B 29 H <br> H 01 H |

The present search report has been drawn up for all claims

| Place of search | Date of completion of the search | Examiner |
|---|---|---|
| THE HAGUE | 26-10-1989 | MOLTO PINOL F.J. |